# EUROPÄISCHE PATENTANMELDUNG

(11) **EP 2 363 228 A2**
(43) Veröffentlichungstag der Anmeldung: **07.09.2011**
(21) Anmeldenummer: 11152039.1
(22) Anmeldetag: 25.01.2011
(51) Int. Cl.: B23C 3/30, B23Q 5/04

(54) **Werkzeug und Verfahren zum Herstellen einer Welle**

(30) Priorität: 04.03.2010 DE 102010010135
(71) Anmelder: Wesa GmbH, 73550 Waldstetten (DE)
(72) Erfinder: Weber, Wolfgang, 73550, Waldstetten (DE)
(74) Vertreter: Alber, Norbert

(57) **Zusammenfassung**

In Umfangsrichtung wirkende, in Längsrichtung (10) verlaufende Anschlagflächen (8a, b) in der Innenkontur von z. B. Getriebewellen (1), werden bisher meist durch Kaltumformen an einem Rohling vorab hergestellt, der anschließend mittels Drehen und Fräsen fertig bearbeitet wird. Erfindungsgemäß wird - zwecks Einsparung des Schmiedevorganges und der dafür notwendigen Maschine und Umspannvorgänge - dies mit einem walzenförmigen oder pilzförmigen, von der Stirnseite her eintauchenden Fräser oder Schleifkopf in derselben Drehmaschine durchgeführt.

## Beschreibung

### I. Anwendungsgebiet

Die Erfindung betrifft Wellen, wie sie insbesondere in Lenkgetrieben verwendet werden, und wenigstens über einen Teil ihrer Länge rotationssymmetrische Bauteile sind.

### II. Technischer Hintergrund

Die Erfindung betrifft Wellen, die an ihren beiden Enden jeweils einen entsprechend gestalteten Funktionsbereich besitzen, der bearbeitet werden muss.

Im Folgenden wird daher immer von Getriebewellen gesprochen, ohne die erfindungsgemäßen Wellen auf den Einsatz in einem Getriebe zu beschränken.

Eine solche Getriebewelle weist häufig an ihrem einen Funktionsbereich in Umfangsrichtung wirkende, eine oder mehrere, meist gerade in Axialrichtung verlaufende, Umfangs-Anschlagflächen auf, die sich in einem Innenumfang der Getriebewelle befinden und dem Zusammenwirken mit einem weiteren Bauteil dienen.

Der Innenumfang, in dem diese Anschlagflächen ausgebildet sind, ist dabei häufig eine über die gesamte Länge der Getriebewelle durchgehende zentrale Durchgangsöffnung.

Wenn derartige Getriebewellen in großer Stückzahl benötigt werden, ist es üblich, die Welle nicht direkt mittels spanender Bearbeitung, insbesondere mittels Drehen, aus einem zylindrischem Rohling zu fertigen, da zum einen hierfür relativ große Zerspanungsmengen von einem Rohling abgenommen werden müssen und zum anderen radial gerichtete, in Längsrichtung verlaufende Anschlagflächen an einem Innenumfang mittels Drehen nicht herstellbar sind.

Stattdessen wir aus einem zylindrischen oder rohrförmigen Zwischenrohling zunächst mittels Kaltumformung in einer Presse ein Schmiedeteil hergestellt, welches die Innenkontur mit den Umfangs-Anschlagflächen darin bereits aufweist und im Fall einer vorher vorhandenen zentralen Durchgangsöffnung diese ebenfalls noch durch Schmieden gestaltet, z. B. bereichsweise aufweitet.

Durch das Kaltumformen verändert sich jedoch auch die Außenkontur, die anschließend mittels Drehen und gegebenenfalls hinsichtlich z. B. eines Außengewindes mittels Abwälzfräsen bearbeitet wird.

Allerdings muss hierfür das Werkstück exakt zentrisch in der Drehmaschine aufgenommen werden, was mangels Vorhandensein von Zentrierbohrungen wegen der zentralen Durchgangsöffnung nicht direkt möglich ist.

Zunächst müssen zumindest in der der geschmiedeten Seite gegenüberliegenden Seite der Innenumfang kegelförmig ausgedreht und zentriert werden, um hier eine Zentrierspitze anzusetzen und gegebenenfalls außen zu überdrehen und danach an diesem Außenumfang durch Spannbacken zu klemmen, damit der im geschmiedeten Endbereich dann vorhandene, frei auskragende Außenumfang mittels Drehen bearbeitet werden kann.

Erst wenn dies erfolgt ist, kann auf das andere Ende umgespannt werden und der erste Funktionsbereich nochmals für eine ausreichende Genauigkeit der Außenkontur überdreht werden.

Für dieses Herstellungsverfahren sind somit mehrere Maschinen, zumindest eine Kaltumformmaschine und eine Drehmaschine, notwendig, und das Werkstück muss mindestens dreimal, falls vor dem Kaltumformen auch noch die zentrale Bohrung hergestellt wird, sogar wesentlich öfter, neu gespannt werden.

Dies alles führt zu Quellen für Herstellungsungenauigkeiten, einem hohen Investitionsaufwand für Maschinen und hohen Haupt- und Nebenzeiten bei der Herstellung einer solchen Getriebewelle.

### III. Darstellung der Erfindung

### a) Technische Aufgabe

Es ist daher die Aufgabe gemäß der Erfindung, ein Verfahren zur kostengünstigen Bearbeitung einer gattungsgemäßen Getriebewelle zu schaffen einschließlich eines hierfür geeigneten Werkzeuges, sowie die Getriebewelle selbst im Hinblick auf eine optimale Bearbeitbarkeit spezifisch auszubilden.

### b) Lösung der Aufgabe

Diese Aufgabe wird durch die Merkmale der Ansprüche 1, 10 und 14 gelöst. Vorteilhafte Ausführungsformen ergeben sich aus den Unteransprüchen.

Durch das Herstellen der inneren Umfangs-Anschlagflächen mittels stirnseitigem Einfahren eines rotierenden Werkzeuges kann auf einen separaten Kaltumformprozess in einer separaten Schmiedemaschine völlig verzichtet werden, und die Herstellung dieser Umfangsanschlagflächen erfolgt wie die Herstellung der gesamten anderen Innen- und Außenkontur einer Welle in ein und derselben Drehmaschine mit C-Achse.

Sofern das Werkstück über seine gesamte Länge und insbesondere in beiden Endbereichen bearbeitet werden soll, empfiehlt sich hierfür eine Drehmaschine mit zwei gegeneinander gerichteten Futtern, die insbesondere eine direkte Übergabe des Werkstückes von der Einspannung in der ersten Spindel an die zweite Spindel und damit die Bearbeitung des dann frei werdenden anderen Endbereiches automatisch ermöglichen.

Getriebewellen mit einer Innenkontur, die meist in Axialrichtung verlaufende, in Umfangsrichtung wirkende Umfangs-Anschlagflächen aufweist, werden beispielsweise in Lenkgetrieben benötigt:

Dort wirkt eine solche Getriebewelle mit einer zweiten Getriebewelle zusammen, die auf dem Außenumfang dazu passende Umfangs-Anschlagflächen aufweist, die jedoch in Drehrichtung ein Spiel gegenüber den inneren Umfangs-Anschlagflächen der hier beschriebenen Getriebewelle aufweist.

Beide Getriebewellen sind durch einen zentralen inneren Torsionsstab miteinander verbunden, der kraftschlüssig in die Durchgangsöffnungen der beiden Getriebewellen mit jeweils einem Endbereich fixiert ist, und mittels seiner Torsion eine Rückstellung der Lenkung in die Mittellage bewirkt.

Die zusammenwirkenden Umfang-Anschlagflächen bieten lediglich die formschlüssige Sicherheit, dass bei Brechen des Torsionsstabes immer noch eine funktionsfähige mechanische Verbindung im Strang des Lenkgetriebes vorhanden ist.

Jedoch werden solche in Längsrichtung verlaufenden Umfangsanschlagflächen in einem Innenumfang auch für andere Zwecke und bei anderen Bauteilen benötigt.

Dabei herrschte bisher das technische Vorurteil vor, dass bei großen Stückzahlen solche Flächen nur mittels eines Kaltumformprozesses wirtschaftlich herstellbar seien, der aus einem rohrförmigen Rohling eine solche Innenkontur in der Regel mit einem einzigen Schlag und damit in einer Sekunde herstellt. Dafür war jedoch eine separate Kaltumform-Maschine notwendig.

Erfindungsgemäß werden solche inneren Umfangs-Anschlagflächen, die meist paarweise als Flanken einer entsprechenden innen verlaufenden Längsnut vorhanden sind, dagegen durch Materialabtrag mittels eines rotierenden Werkzeuges, also z. B. eines Fräsers oder Schleifers, hergestellt.

Die reine Bearbeitungszeit hierfür ist auch bei der erfindungsgemäßen Lösung dabei in aller Regel tatsächlich wesentlich höher als die Hauptzeit des Kaltumformprozesses.

Durch die erfindungsgemäße Vorgehensweise wird die Bearbeitungszeit jedoch immerhin so gering gehalten, dass im Zuge einer Gesamtbetrachtung mit Einbeziehung der Nebenzeiten für Umspannen, Zentrieren und Beseitigung der durch den Kaltumformprozess erst bewirkten Formabweichungen z. B. an der Außenkontur, sich bei der erfindungsgemäßen Vorgehensweise insgesamt ein geringerer Kostenaufwand ergibt, insbesondere unter Berücksichtigung des Wegfalls der Investitionskosten für eine Kaltumformmaschine, also eine Stanz- oder Schmiedepresse.

Das Problem besteht darin, abhängig von der Größe des Innenumfanges ein rotierendes Werkzeug zu schaffen, welches klein genug ist, um in diesem Innenumfang stirnseitig einzutauchen, und dennoch eine ausreichende Kraft aufbringt, um die Zeit für den notwendigen Materialabtrag nicht allzu stark ansteigen zu lassen.

Da es sich bei der Innenkontur in der Regel um eine kreisförmige Innenkontur handelt, in der die Längsnut mit den seitlichen Umfangs-Anschlagsflächen angeordnet ist, und die Längsnut eine geringere Breite gegenüber dem Durchmesser des Innenumfanges besitzt, steht bei einer ersten Ausführungsform des Werkzeuges seitlich außerhalb der Breite der inneren Längsnut Raum für die beidseitige Lagerung eines walzenförmigen rotierenden Werkzeuges und auch dessen Antrieb an einem Tragarm zur Verfügung:

Die Rotationsachse des walzenförmigen Werkzeuges liegt dann in einer Planebene der herzustellenden Welle und das walzenförmige Werkzeug bearbeitet mit seiner Umfangsfläche den Boden der herzustellenden Nut und mit seinen Stirnflächen die Flanken der herzustellenden Nut, selbstverständlich bei stillstehendem, also nicht drehendem Werkstück, welches auf dem vom bearbeiteten Bereich abgewandten Ende wie üblich in einem Spannfutter einer Drehmaschine, die über eine C-Achs-Funktion verfügt, gehalten ist.

Die beidseitige Lagerung des walzenförmigen Werkzeuges hat darüber hinaus den Vorteil, dass beide Lagerungsseiten für einen möglichen Antrieb des rotierenden Werkzeuges verwendet werden können, falls die Kraftübertragung in der einen Lagerungsseite aus Platzgründen nicht ausreichend stark ausgebildet werden kann.

Dafür kommt prinzipiell jede Antriebsart in Frage, beispielsweise ein mechanischer Antrieb über eine rotierende Welle mit einem Kegelrad-Winkelgetriebe, aber ebenso ein pneumatischer, hydraulischer oder elektrischer Antrieb.

Da die Bearbeitungsstelle durch ein flüssiges Kühl-Schmiermittel mit einer großen Flüssigkeitsmenge gekühlt werden muss, besteht eine bevorzugte Ausführungsform darin, das unter hohem Druck auszubringende Kühl-Schmiermittel vorher über einen Turbinenrad-Fortsatz des rotierenden Werkzeuges zu leiten, und darüber das Werkzeug anzutreiben.

Die dadurch erzielten hohen Drehzahlen des Werkzeuges bei nicht allzu hohem Drehmoment ergeben eine Eignung dieses Antriebes für Bearbeitungsverfahren mit niedrigen Schnittkräften, beispielsweise einer Schleifscheibe als Werkzeug oder einem Fräser, der geringe Schnittkräfte aufweist aufgrund z. B. der Paarung einer hohen Schnittgeschwindigkeit von deutlich über 200 U/min, besser bis zu 800 U/min, mit einer positiven Schneidengeometrie, was in Kombination die Schnittkräfte niedrig hält.

Der Vorschub des Werkzeuges kann dann von der Steuerung in Abhängigkeit der Drehzahl des Werkzeuges gesteuert werden, die zu diesem Zweck erfasst werden muss, so dass also die Schnittgeschwindigkeit des Werkzeuges nicht unter eine vorgegebene Untergrenze von beispielsweise 200 U/min fällt.

Eine zweite Ausführungsform des Werkzeuges unterscheidet sich von der bisher beschriebenen Lösung dadurch, dass das rotierende Werkzeug pilzförmig ausgebildet ist mit einer Lage der Rotationsachse ebenfalls in der Planebene der Welle, aber lotrecht zum Boden der herzustellenden Nut. Allerdings bearbeitet hier die Stirnfläche des Werkzeuges den Boden der Nut, und die Umfangsfläche des Werkzeuges die Flanken der Nut.

Während bei einem walzenförmigen, beidseitig gelagerten Werkzeug der Durchmesser der Walze so gewählt werden kann, dass er genau dem Abstand zwischen den Böden zweier einander gegenüberliegender, identischer Nuten entspricht, und dadurch beide Nuten gleichzeitig mit einer Eintauchbewegung des Werkzeuges gefertigt werden können, ist dies mit einem einzigen pilzförmigen Werkzeug nicht möglich, wohl jedoch mit zwei mit ihren Rückseiten einander gegenüberliegenden pilzförmigen Werkzeugen, die von einem dazwischen angeordneten Tragarm in einander wegweisende Richtungen angeordnet und angetrieben sind.

Abhängig von der Größe des zur Verfügung stehenden Innenumfanges kann es jedoch notwendig sein, den vorhandenen Freiraum großräumig für einen solchen Tragarm zu verwenden und an diesem nur auf einer Seite ein pilzförmiges rotierendes Werkzeug anzuordnen.

Die Mantelfläche des walzenförmigen Werkzeuges und die Stirnfläche des pilzförmigen Werkzeuges sind in aller Regel deshalb gewölbt, weil der Boden der Nut konkav ballig ausgeführt sein soll, da das hier einzusetzende andere Bauteil in aller Regel eine kreisförmige Außenkontur besitzt.

Falls dies nicht notwendig ist und die innen liegenden Längsnuten einen ebenen Boden besitzen dürfen, ist natürlich keine ballige Gestaltung der entsprechenden Werkzeuge notwendig, sondern die Mantellinie des walzenförmigen Werkzeuges bzw. die Stirnfläche des pilzförmigen Werkzeuges können gerade sein.

Die Ausführungen zur Schnittkraft und insbesondere der Schnittgeschwindigkeit und positiven Schneidengeometrie gelten auch für die zweite Ausführungsform.

Ein weiteres Problem ist die schnelle und ausreichende Späneabfuhr, die gerade bei einem so kleinen Werkzeug schnell zu einem Fehlverhalten führt.

Sofern die Welle eine zentrale Durchgangsöffnung besitzt, wird diese zentrale Durchgangsöffnung vor dem Bearbeiten der Umfangs-Anschlagflächen hergestellt, und deren Bearbeitung anschließend bei aufrechtstehender Welle durchgeführt, wobei das Eintauchen des rotierenden Werkzeuges von der Unterseite her erfolgt, und die entstehenden Späne schwerkraftbedingt nach unten fallen können, was massiv dadurch unterstützt wird, dass das Kühl-Schmiermittel zusätzlich auch durch die zentrale Durchgangsöffnung von oben her und nach unten gerichtet an der Bearbeitungsstelle eingebracht wird.

Dabei wird das Kühl-Schmiermittel mit einem hohen Druck von mindestens 100 bar, besser mindestens 200 bar, eingebracht, und bei Verwendung des walzenförmigen, rotierenden Werkstückes wird dessen Drehrichtung so gewählt, dass an der Kontaktstelle die Bewegung des Werkzeuges in Richtung der benachbarten, unten liegenden, freien Stirnseite der Getriebewelle gerichtet ist.

Um die benötigten inneren Umfangsanschlagflächen wie vorbeschrieben ohne weitere Nachbearbeitungsvorgänge herstellen zu können, wird vorzugsweise die fertige Getriebewelle so gestaltet, dass der Boden der inneren Längsnut
- bei Verwendung eines beidseitig gelagerten walzenförmigen Fräsers in der Seitenansicht betrachtet am hinteren, inneren Ende gerundet ausläuft, oder
- bei Verwendung eines pilzförmigen rotierenden Werkzeuges der Boden der Nut in der Aufsicht betrachtet halbrund am inneren Ende endet.

Da häufig hinter dem inneren hinteren Ende der Nut eine den zentralen Durchlass verengende Schulter aus funktionalen Gründen angeordnet ist, die vom hinteren Ende der Nut in der Regel nicht durchbrochen werden soll, hängt die Wahl des Werkzeuges häufig davon ab, welche Distanz zwischen dem hinteren Ende der notwendigen inneren Umfangs-Anschlagflächen und der danach folgenden einengenden Schulter zur Verfügung steht und wie stark der radiale Sprung durch diese Schulter ist.

Abhängig davon kann beispielsweise nur die eine oder die andere Ausführungsform des Werkzeuges gewählt werden, oder möglicherweise auch eine Abart des einseitig gelagerten pilzförmigen Werkzeuges, deren Durchmesser geringer ist als die Breite der Nut, so dass damit die einzelnen Flanken der Nut, also die inneren Umfangs-Anschlagflächen, nur einzeln gefertigt werden können und nicht die gesamte Nut auf einmal, deren Breite sonst dem Durchmesser des pilzförmigen Werkzeuges, also eines Fingerfräsers oder Fingerschleifers, entspricht.

### c) Ausführungsbeispiele

Ausführungsformen gemäß der Erfindung sind im Folgenden beispielhaft näher beschrieben. Es zeigen:
- Fig. 1a:: Die Getriebewelle im Längsschnitt,
- Fig. 1b:: die Getriebewelle in der stirnseitigen Ansicht,
- Fig. 2:: eine erste Variante der Herstellung der Innenkontur, und
- Fig. 3:: eine zweite Variante der Herstellung der Innenkontur.

Die Getriebewelle 1 ist ein im wesentlichen rotationssymmetrisches Teil, also rotationssymmetrisch um dessen axiale Richtung 10, die gleichzeitig die Drehachse der Drehmaschine ist, wenn die rotationssymmetrischen Bereiche der Welle wie etwa die abgestuften Außenumfänge 6a, b, c.... oder die ebenfalls abgestuften Innenumfänge 4 auf einer Drehmaschine mittels Drehen hergestellt werden.

Dafür kann die Welle wie dargestellt in jeweils einem ihrer Endbereiche 3a oder 3b in einem üblichen Spannfutter 15b oder 15a einer Drehmaschine über einen Teil seiner Längserstreckung aufgenommen sein, so dass der vorstehende andere Endbereich mittels üblicher Drehwerkzeuge gedreht werden kann.

Bei den Futtern 15a, b kann es sich um die gegeneinander gerichteten Futter zweier gegeneinander gerichteter Spindeln auf derselben Drehmaschine handeln, oder um das gleiche, einzige Futter einer einzigen Spindel der Drehmaschine, so dass dann ein Umspannen einschließlich Wenden des Werkstückes für die Bearbeitung des jeweils anderen Endbereiches 3b, a notwendig ist.

Die dargestellte Welle 1 besitzt am Ende 3b mit dem kleineren Außendurchmesser auf dem Außenumfang ein Außengewinde 12, in dessen Längsverlauf sich eine Umfangsnut 19 mit halbrundem Querschnitt befindet, in die anschließend eine formschlüssige Sicherung gegenüber einem anderen Bauteil z. B. eine Gegenwelle 1', eingebracht werden kann.

An diesem Ende 3b ist das freie Ende des Innenumfanges mit einem Zentrierkonus 17 ausgestattet, um bei noch nicht bearbeitetem Außenumfang die Welle 1 an diesem Ende an einer Zentrierspitze eines Reitstockes spannen zu können.

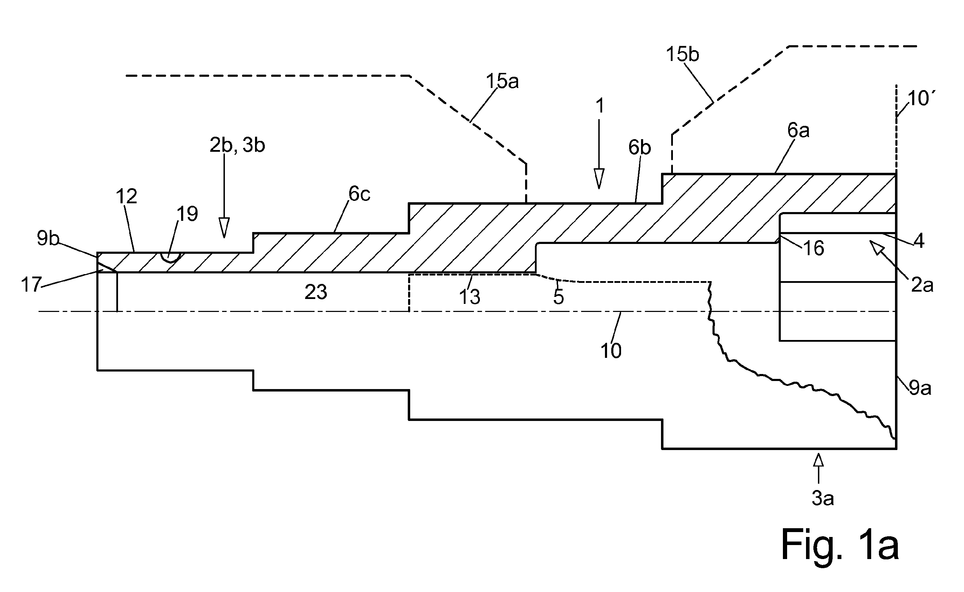

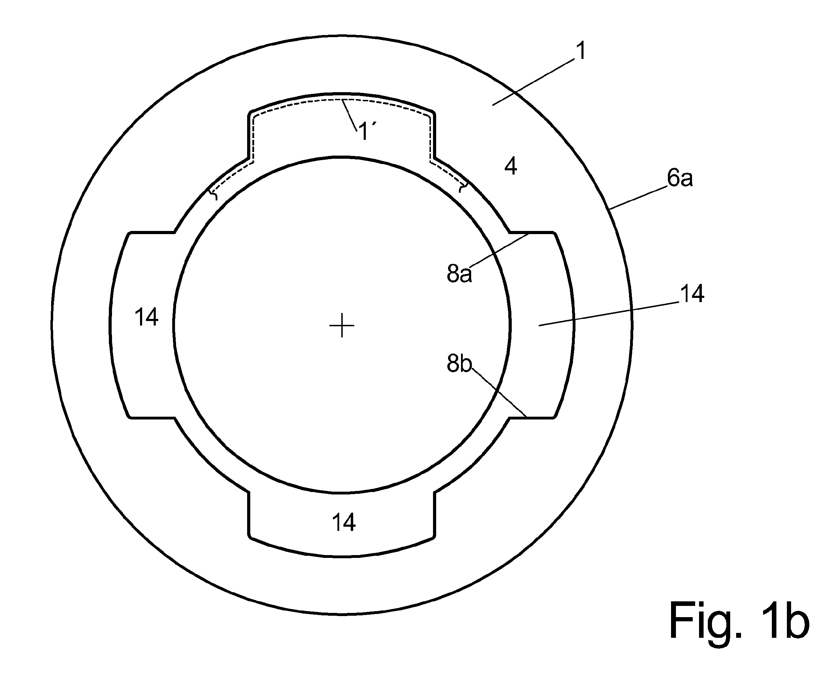

Im späteren Einsatz wird in dem Innenumfang der Welle 1 mittels einer Presspassung 13 das Ende eines angedeuteten Stabes 5 befestigt, der über das freie Ende der Getriebewelle 1 hinaus vorsteht und mit seinem nicht dargestellten anderen Ende in einer nur in Figur 1b angedeuteten Gegenwelle 1' analog fixiert ist, und zwischen diesen beiden Wellen 1 und 1', die in Drehrichtung gegeneinander spiel behaftet sind, als Torsionsstab dient.

Das für die vorliegende Erfindung wesentliche Gestaltungsmerkmal der Getriebewelle 1 sind die in dem der Gegenwelle 1' zugewandten Ende 3a als ersten Funktionsbereich 2a angeordneten Längsnuten 14 in dem zentrischen Innenumfang 4, die besser in Figur 1b zu erkennen sind:

Diese Längsnuten 14 enden in der vorderen Stirnfläche 9a, und reichen bis annähernd an eine den Innenumfang 4 verkleinernde Schulter 16 im Inneren der Getriebewelle 1 heran.

Die Flanken dieser Längsnuten 14 sind die gegeneinander gerichteten Umfangs-Anschlagflächen 8a, b, die parallel oder in Axialrichtung 10 betrachtet auch winklig zueinander liegen können.

Wie Figur 1b zeigt, befinden sich in dem Innenumfang 4 insgesamt vier innere Längsnuten 14, die jeweils identische Abmessungen besitzen und paarweise diametral einander gegenüberliegend angeordnet sind.

Im Arbeitseinsatz der Getriebewelle 1 steckt in dem Innenumfang 4 eine Gegenwelle 1', die nach außen vorstehende Nasen aufweist, die in diese Längsnuten 14 eingreifen, jedoch eine geringere Breite besitzen und ein Spiel in Umfangsrichtung zwischen Getriebewelle 1 und Gegenwelle 1' bewirken.

Die Nuten 14 und die darin eingreifenden Nasen in Umfangsrichtung sind lediglich als formschlüssige Nutverbindung vorgesehen für den Fall, dass der die Drehung tatsächlich übertragende Torsionsstab 5 brechen sollte.

Dennoch müssen die Umfangs-Anschlagflächen 8a, b, die in der Regel parallel zueinander ausgeführt sind, exakt maßhaltig hergestellt werden.

Um die Herstellung der darin eingreifenden Gegenwelle 1' zu vereinfachen, ist diese ebenfalls als Drehteil hergestellt und besitzt eine kreisbogenförmige Außenkontur, was einen ebenfalls kreisbogenförmig konkav gebogenen Boden der Nuten 14 erfordert.

Würde man den Boden der Nuten 14 eben gestalten, so würde dadurch in den Eckbereichen der Nuten 14 die verbleibende Wandstärke zum Außenumfang 6a der Getriebewelle 1 unzulässig gering werden, wenn die Nut-Tiefe die gleiche bleiben soll.

Erfindungsgemäß wird die Getriebewelle 1 aus einem Rundmaterial oder Rohrmaterial hergestellt, indem
- der Rohling zunächst im Futter 15b einseitig auskragend auf dem unbearbeiteten Außenumfang gespannt wird,
- abhängig von der Auskragungslänge in der freien Stirnfläche 9b ein Zentrierkonus eingebracht und eine Zentrierspitze daran angesetzt und
- anschließend die zentrischen Außenumfänge 6b, c gedreht werden und auch die Rohkontur des Außengewindes 12,
- anschließend wird das Außengewinde 12 aufgebracht durch Abwälzen eines parallel dazu drehenden Abwälzfräsers in Kontakt mit der rotierenden Getriebewelle 1,
- wobei vorher oder nachher die Umfangsnut 19 wiederum mittels Drehen eingebracht wird.

Das Aufbohren des Innenumfanges auf den kleinsten vorhandenen Innendurchmesser geschieht entweder in dieser oder der anschließenden Aufspannung der Welle im Futter 15a vom gegenüberliegenden Ende 3b z. B. auf dem Außenumfang 6b, wodurch der im Endbereich 3b bereits fertig gestellte Funktionsbereich 2b im Futter 15a aufgenommen ist.

Anschließend erfolgt von der Stirnfläche 9a her das Herstellen des größeren Innendurchmessers einschließlich des Innenumfanges 4 mittels Aufbohren oder Ausdrehen.

Natürlich erfolgt auch in jeder Aufspannung das Plandrehen der jeweils frei zugänglichen Stirnfläche 9a bzw. 9b, meist als jeweils erster Arbeitsschritt.

Zuletzt erfolgt bei stillstehender Welle das für die vorliegende Erfindung wesentliche Herstellen der inneren Umfangs-Anschlagflächen 8a, b, während dies bei der bisherigen klassischen Herstellungsweise mittels Schmieden vor der Drehbearbeitung erfolgte.

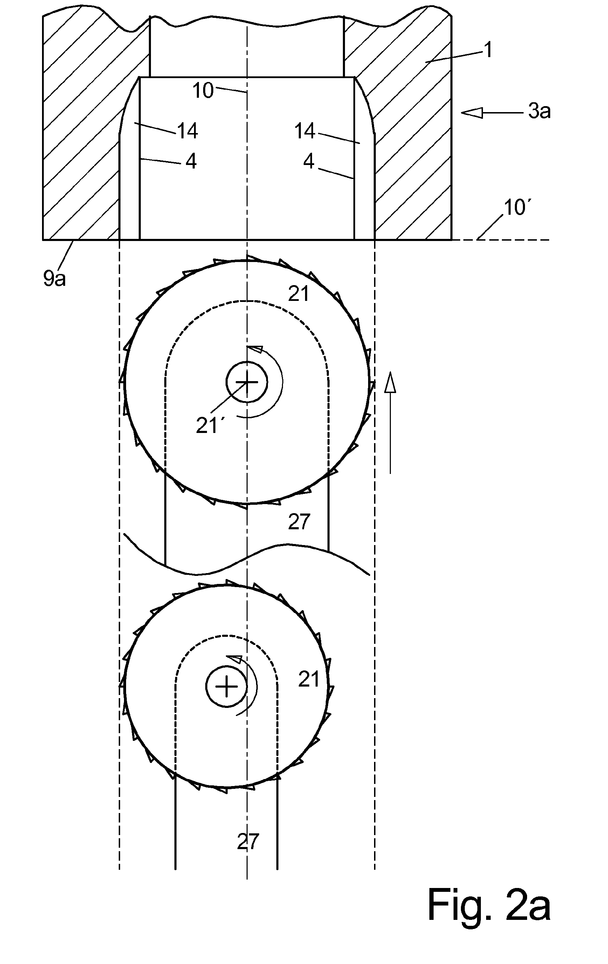

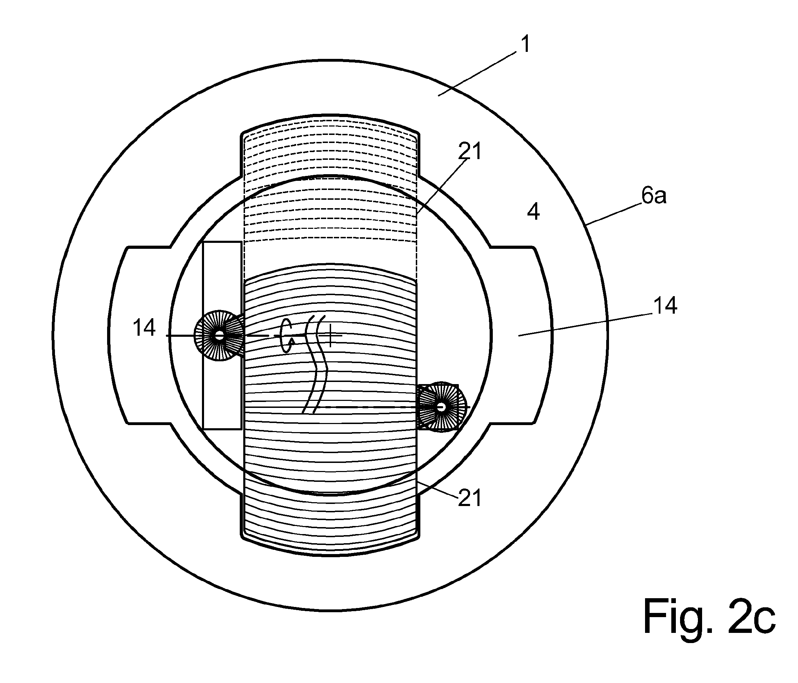

Wie Figur 2a zeigt, wird dabei ein walzenförmiges Werkzeug 21, dessen Rotationsachse 21' in der lotrecht auf der Längsachse 10 der Welle 1 stehenden Planebene 10' liegt, bei stillstehender Getriebewelle 1 von der freien Stirnfläche 9a her in Längsrichtung 10 in das Ende 3a der Welle 1 eingefahren, so dass die auf dem Umfang des rotierenden walzenförmigen Werkzeuges 21 - eines Fräsers oder Schleifers - angeordneten Schneiden in dem Innenumfang 4 die Nut 14 durch Materialabnahme einarbeiten.

Wenn je zwei gleiche Nuten 14 einander genau gegenüberliegen, kann das walzenförmige Werkzeug 21 einen Durchmesser besitzen, der dem Abstand der Böden der Nuten 14 zueinander entspricht, so dass beide einander gegenüberliegenden Nuten 14 gleichzeitig hergestellt werden.

Sofern dies nicht möglich ist ― beispielsweise weil sich die Nuten 14 nicht paarweise identisch gegenüber liegen oder der Abtransport der Späne auf einer Seite des Innenumfanges bei gemeinsamer Herstellung nicht gewährleistet ist - kann der Durchmesser des Werkzeuges 21 auch geringer gewählt werden, so dass jede Nut 14 separat hergestellt wird, wie in der zweiten Alternative in Figur 2a dargestellt.

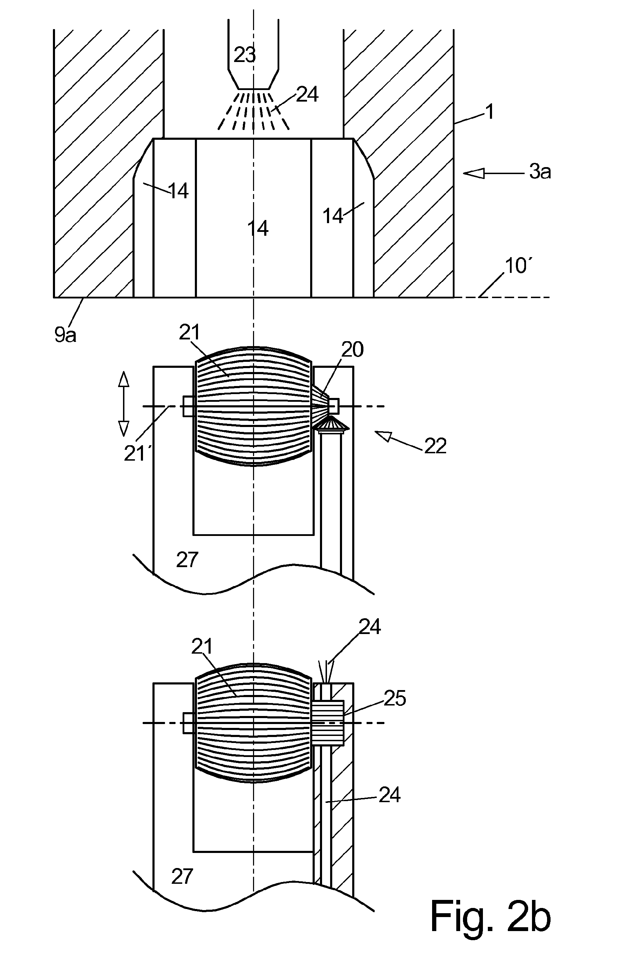

Figur 2b lässt erkennen, dass aus Stabilitätsgründen das Werkzeug 21 vorzugsweise beidseits in einen Tragarm 27 gelagert ist, wobei auf mindestens einer Lagerungsseite eine Antriebszuführung 22 durch den Tragarm 27 hindurch zu dem Werkzeug 21 erfolgen muss, je nach aufzubringender Kraft, eventuell auch beidseitig.

In Figur 2b ist als eine Möglichkeit ein mechanischer Antrieb mit einer Antriebswelle längs verlaufend in Richtung des Tragarmes 27 dargestellt, der über eine z. B. Kegelverzahnung auf die Stirnseite des Werkzeuges 21 übertragen werden kann.

Figur 2b lässt auch die ballig konvex gewölbte Mantelfläche des Werkzeuges 21 erkennen, um eine entsprechend konkav ballige Kontur des Bodens der Längsnut 14 zu erzeugen aus den oben dargelegten Gründen.

Wie die Figuren 2a und 2b zeigen, erfolgt die Herstellung der Nut 14 mit diesem Werkzeug vorzugsweise bei aufrechtstehender Getriebewelle 1 mit nach unten gerichteter Stirnfläche 9a, in der die Nuten 14 enden, so dass die beim Bearbeiten mittels des Werkzeuges 21 entstehenden Späne schwerkraftbedingt und unterstützt durch von oben, über die zentrale Durchgangsöffnung 23 der Getriebewelle 1 eingebrachtes, Kühl-/Schmiermittel 24, leicht nach unten ausgeschwemmt werden können.

Figur 2b zeigt in der unteren Hälfte eine zweite Variante des Antriebes des Werkzeuges 21 im Tragarm 27, in dem das Kühl-/Schmiermittel 24 durch den Tragarm 27 hindurch zugeführt wird und vor dem Austritt an dem vorderen freien Ende des Tragarmes 27 über eine drehfest mit dem Werkzeug 21 verbundene Turbine 25 geleitet werden, und somit das Kühl-/Schmiermittel 24 gleichzeitig den Antrieb des Werkzeuges 21 darstellt.

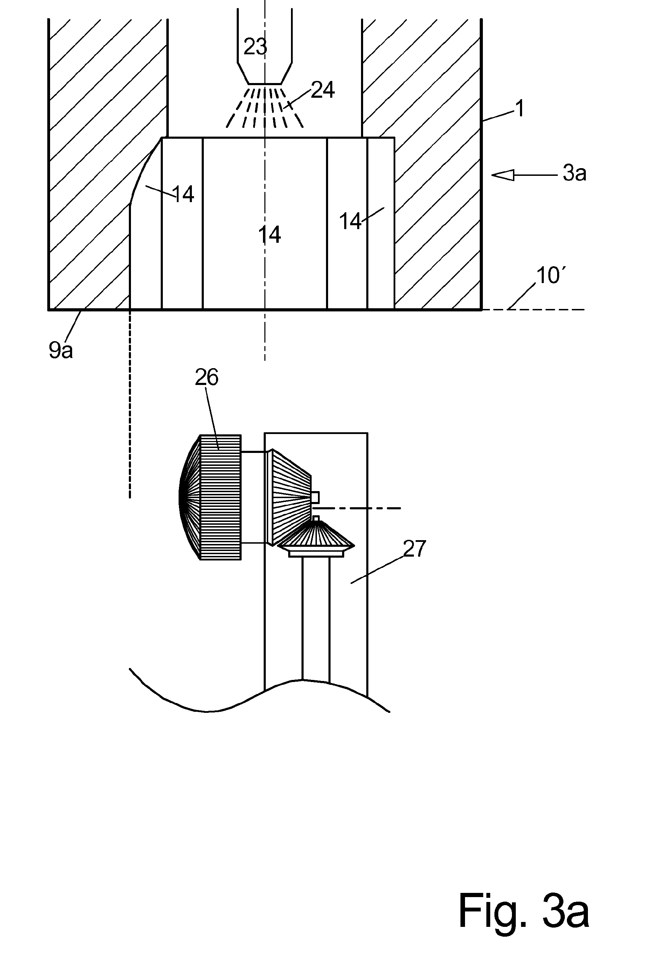

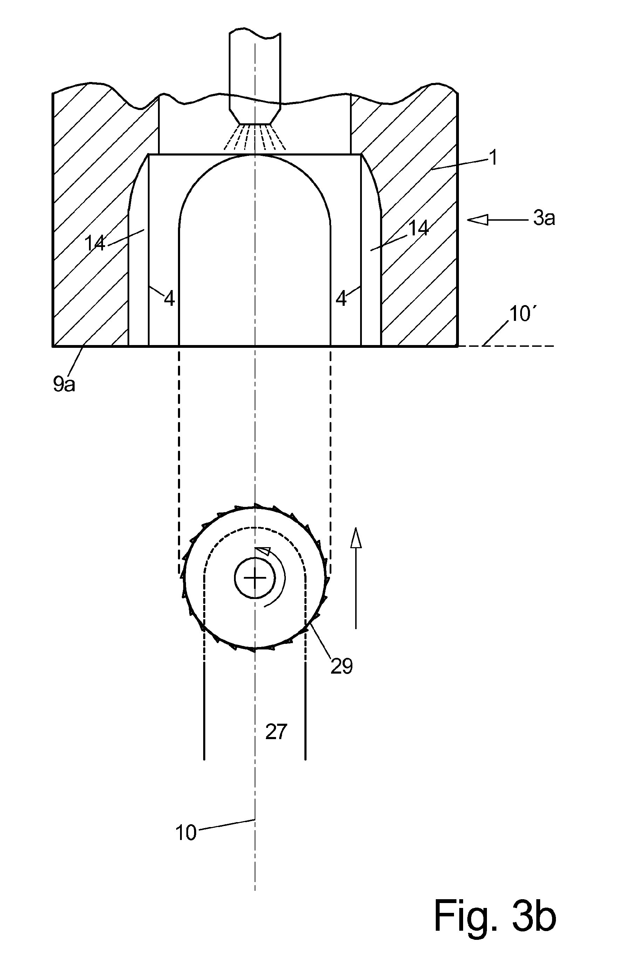

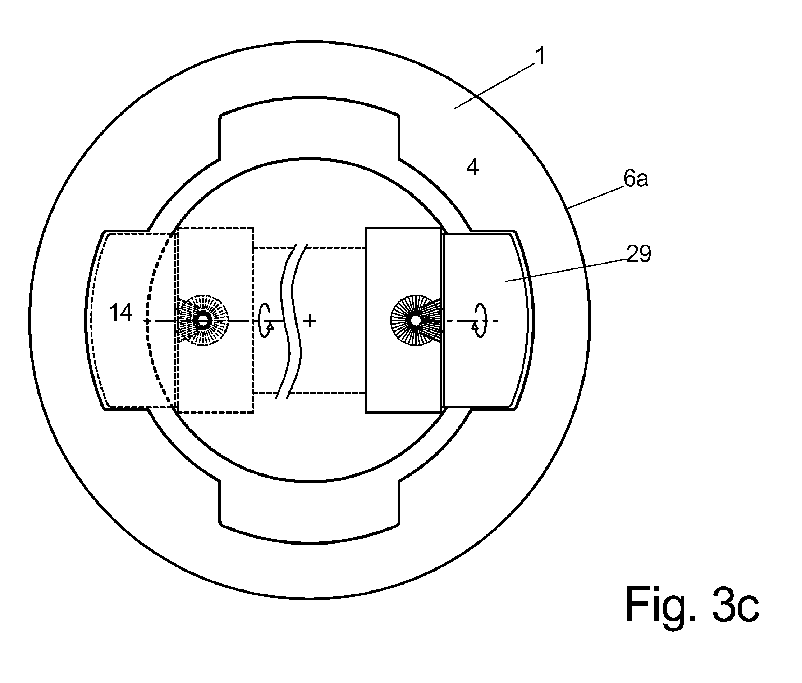

Die Figuren 3 zeigen eine zweite Herstellungsvariante der Nuten 14 mit einem pilzförmigen Werkzeug 26, welches nur einseitig gelagert von dem Tragarm 27 zur einen Seite hin abstrebt, jedoch auch doppelt vorhanden sein kann, also von beiden einander entgegengerichteten Seiten vom Tragarm 26 jeweils abstrebend, wie in den Figuren 3 dargestellt:

Dabei liegt die Rotationsachse des pilzförmigen Werkzeuges 26 ebenfalls in der Planebene 10'.

Während bei dem walzenförmigen Werkzeug 21 jedoch die Umfangsfläche des Werkzeuges 21 den Boden der Nut 14 herstellt, und die Flanken des Werkzeuges die Flanken der Innennut 14, da die Rotationsachse 21' dort parallel zum Boden der Nut 14 verlief, verläuft sie bei dem pilzförmigen Werkzeug 26 lotrecht zum Boden der Nut 14.

Deshalb wird der Boden der Nut 14 durch die ballig geformte Stirnfläche des pilzförmigen Werkzeuges 26 bearbeitet, während dessen Umfangsflächen die Flanken, also die Umfangs-Anschlagflächen 8a, b der Nut 14, bearbeiten.

Abhängig von den herrschenden Bearbeitungskräften, Materialeigenschaften etc. kann auch hier gewählt werden, ob
- jedes pilzförmige Werkzeug 26 einen Durchmesser besitzt, der der Breite der Nut 14 entspricht, so dass beide Flanken, also gegeneinander gerichtete Innenumfangsflächen 8a, b einer Nut 14 gemeinsam hergestellt werden, oder
- der Durchmesser des pilzförmigen Werkzeuges 26 geringer ist und dadurch immer nur eine Flanke und ein Teil des Bodens einer Nut 14 hergestellt werden und/oder
- vom Tragarm 27 nur in eine Richtung oder in beide einander gegenüberliegende Richtungen pilzförmige Werkzeuge 26 der vorbeschriebenen Art abstehen und natürlich dann auch gemeinsam ― nach einer der zuvor anhand des walzenförmigen Werkzeuges beschriebenen Arten - angetrieben werden.

### BEZUGSZEICHENLISTE

- 1: Getriebewelle, Welle
- 1': Gegenwelle
- 2a: erster Funktionsbereich
- 2b: zweiter Funktionsbereich
- 3a, b: Ende
- 4,: zentrischer Innenumfang
- 5: Stab
- 6a, b,: zentrischer Außenumfang
- 7: Axial-Anschlagfläche
- 8a, b: Umfangs-Anschlagfläche
- 9a, b: freie Stirnfläche
- 10: axiale Richtung, Drehachse
- 10': Planebene
- 11: Außenumfangsfläche
- 12: Außengewinde
- 13: Presspassung
- 14: Längsnut, Nut
- 15a, b: Spannfutter
- 16,: Schulter
- 17,: Zentrierkonus
- 18: Stange
- 19: Umfangsnut
- 20: Schneckenverzahnung
- 21: walzenförmiges Werkzeug
- 21': Rotationsachse
- 22: Antriebszuführung
- 23: zentrale Durchgangsöffnung
- 24: Kühl-/Schmiermittel
- 25: Turbine
- 26: pilzförmiges Werkzeug
- 27: Tragarm

## Patentansprüche

1. Verfahren zum Herstellen einer Getriebewelle (1) mit
- einem ersten Funktionsbereich (2a) mit einem zentrischen Innenumfang (4) mit darin angeordneten inneren Umfangs-Anschlagflächen (8a, b), die in axialer Richtung (10) verlaufen und in der freien Stirnfläche (9a) münden,
**dadurch gekennzeichnet, dass**
- die Umfangs-Anschlagflächen (8a, b) durch Einfahren eines rotierenden Werkzeuges (21, 26), dessen Rotationsachse (21', 26') in einer lotrecht zur Längsachse (10) des Werkstückes liegenden Planebene (10') liegt, erfolgt, und
- als Herstellungsverfahren für die übrigen Teile der Innen- und Außenkontur der Getriebewelle (1) das Drehen, Bohren, Fräsen und/oder Schleifen auf derselben Drehmaschine mit gesteuerter C-Achse gewählt wird, auf der auch das Bearbeiten der Umfangs-Anschlagflächen (8a, b) erfolgt.

2. Verfahren nach Anspruch 1,
**dadurch gekennzeichnet, dass**
- das Werkzeug ein beidseitig gelagertes, walzenförmiges Werkzeug (21) oder ein einseitig gelagertes, pilzförmiges Werkzeuges (26) ist, und insbesondere
- mit dem Werkzeug (21, 26) geschliffen oder gefräst wird.

3. Verfahren nach einem der vorhergehenden Verfahrensansprüche, **dadurch gekennzeichnet, dass**
die Umfangs-Anschlagflächen (8a, b) paarweise gegeneinander gerichtet sind und die seitlichen Flanken von in Längsrichtung (10) verlaufenden, inneren Längsnuten (14) sind und die Getriebewelle (1) mindesten ein Paar von einander diametral gegenüberliegenden, identischen Längsnuten (14) aufweist.

4. Verfahren nach einem der vorhergehenden Verfahrensansprüche,
**dadurch gekennzeichnet, dass**
- mit dem Einfahren des rotierenden walzenförmigen Werkzeuges (21) beide einander gegenüberliegenden Längsnuten (14) gleichzeitig hergestellt werden, oder
- zwei einander mit den Rückseiten gegenüber liegende pilzförmige Werkzeuge (26) beidseits in einem Tragarm (27) gelagert sind und damit zwei einander gegenüberliegende Längsnuten (14) gleichzeitig hergestellt werden.

5. Verfahren nach einem der vorhergehenden Verfahrensansprüche,
**dadurch gekennzeichnet, dass**
das rotierende, walzenförmige Werkzeug (21) beidseits in einem Tragarm (27) gelagert ist, der auf mindestens einer Seite, besser auf beiden Seiten, eine Antriebszuführung (22) zu dem Werkzeug (21) aufweist.

6. Verfahren nach einem der vorhergehenden Verfahrensansprüche,
**dadurch gekennzeichnet, dass**
vor dem Herstellen der Längsnuten (14) eine innere zentrale Durchgangsöffnung (23) in der Getriebewelle (1) hergestellt wird und die Längsnuten (14) hergestellt werden bei aufrechtstehender Getriebewelle (1)mit Einfahren des Werkzeuges (21, 26) von der Unterseite her und insbesondere von der Oberseite durch die zentrale Durchgangsöffnung (23) her ein flüssiges Kühl-Schmiermittel (24) eingebracht wird.

7. Verfahren nach einem der vorhergehenden Verfahrensansprüche,
**dadurch gekennzeichnet, dass**
der erste Funktionsbereich (2a) weiterhin im zentrischen Innenumfang mit einer Befestigungsmöglichkeit für einen darin aufzunehmenden Stab (5) umfasst.

8. Verfahren nach einem der vorhergehenden Verfahrensansprüche,
**dadurch gekennzeichnet, dass**
- das Kühl-Schmiermittel (24) mit Hochdruck von mindestens 100 bar, besser mindestens 200 bar, eingebracht wird und/oder
- das rotierende, walzenförmige Werkzeug (21) hydraulisch angetrieben wird und als Antriebsmedium das Kühl-Schmiermittel (24) verwendet wird.

9. Verfahren nach einem der vorhergehenden Verfahrensansprüche,
**dadurch gekennzeichnet, dass**
das Bearbeiten der Innenumfangsflächen mittels Fräsen durch Hochgeschwindigkeitsfräsen mit einer Schnittgeschwindigkeit von mindestens 200 m/s, besser 300 m/s, und einem Fräser mit positiver Schneidengeometrie erfolgt.

10. Rotierendes Werkzeug (21, 26) zum Herstellen der inneren Umfangs-Anschlagflächen (8a, b) der Getriebewelle (1) nach einem der vorhergehenden Ansprüche,
**dadurch gekennzeichnet, dass**
dessen Rotationsachse (21', 26') in einer lotrecht zur Längsachse (10) der Getriebewelle (1) liegenden Planebene (10') liegt und insbesondere ein beidseits gelagertes, walzenförmiges Werkzeug (21) ist oder ein einseitig gelagertes, pilzförmiges Werkzeug (26).

11. Werkzeug nach Anspruch 10,
**dadurch gekennzeichnet, dass**
das rotierende walzenförmige Werkzeug (21) quer zu seiner Rotationsachse (21') betrachtet eine ballige Außenkontur oder das rotierende pilzförmige Werkzeug (26) eine ballige Stirnfläche besitzt entsprechend der Krümmung des Bodens der Längsnut (14).

12. Werkzeug nach einem der vorhergehenden Ansprüche,
**dadurch gekennzeichnet, dass**
- das rotierende Werkzeug (21, 26) ein Fräser oder eine Schleifscheibe ist und insbesondere
- das rotierende Werkzeug (21) mittels eines mechanischen Antriebs, insbesondere mit einem Zahnrad-Winkelgetriebe, angetrieben wird oder mit einem hydraulischen, pneumatischen oder elektrischen Antrieb.

13. Werkzeug nach einem der vorhergehenden Ansprüche,
**dadurch gekennzeichnet, dass**
- das Werkzeug (21, 26) an der Kontaktstelle zur Getriebewelle (1) eine Drehrichtung in Richtung benachbartes freies stirnseitiges Ende der Getriebewelle (1) besitzt, und/oder
- das Werkzeug (21, 26) einen hydraulischen Antrieb besitzt, bei dem insbesondere das Kühl-Schmiermittel (24) als Hydraulikmedium dient.

14. Getriebewelle (1) mit einem insbesondere zentrischem Innenumfang (4), indem Umfangs-Anschlagflächen (8a, b) ausgebildet sind, die in axialer Richtung (10) verlaufen und in der freien Stirnfläche (9a) münden
**dadurch gekennzeichnet, dass**
- die Umfangsanschlagflächen (8a, b) in der Seitenansicht betrachtet an ihrem hinteren Ende gerundet auslaufen und insbesondere die seitlichen Flanken von in Längsrichtung (10) verlaufenden Innennuten (14) sind, oder
- die Umfangsanschlagflächen (8a, b) in der Aufsicht betrachtet an ihrem hinteren Ende gerundet auslaufen und insbesondere die seitlichen Flanken von in Längsrichtung (10) verlaufenden Innennuten (14) sind.

15. Getriebewelle nach Anspruch 14,
**dadurch gekennzeichnet, dass**
- die Innennuten (14) vor einer den Innenumfang (4) verengenden Schulter (16) enden und das runde Ende der Längsnuten (14) diese Schulter (16) nicht erreicht und insbesondere
- die Getriebewelle (1) einen zweiten Funktionsbereich (2b) aufweist, der wenigstens eine zentrische Außen-Umfangsfläche (6a,...) als Lagerstelle sowie ein zentrisches Aussengwinde (12) als Befestigungsgewinde aufweist,
